# FASCICULE DE BREVET EUROPEEN

(11) **EP 4 122 831 B1**
(45) Date de publication et mention de la délivrance du brevet: **18.09.2024**
(21) Numéro de dépôt: 22185554.7
(22) Date de dépôt: 18.07.2022
(51) Int. Cl.: B64D 27/24, B64D 35/08

(54) **SYSTÈME DE PROPULSION À HÉLICE POUR AÉRONEF**
PROPELLERANTRIEBSSYSTEM FÜR LUFTFAHRZEUG
PROPULSION SYSTEM WITH PROPELLER FOR AIRCRAFT

(30) Priorité: 19.07.2021 FR 2107764
(43) Date de publication de la demande: 25.01.2023
(73) Titulaire: Airbus Operations SAS, 31060 Toulouse (FR); Airbus SAS, 31700 Blagnac (FR); Airbus Operations S.L., 28906 Getafe Madrid (ES)
(72) Inventeur: ALLIAS, Jean-François, 31060 TOULOUSE (FR); ALVAREZ, Franck, 31060 TOULOUSE (FR); POME, Pascal, 31060 TOULOUSE (FR); JOLIVET, Nicolas, 31060 TOULOUSE (FR); AMARGIER, Rémi, 31060 TOULOUSE (FR); DEMELAS, Salvatore, 28906 GETAFE MADRID (ES); SIMIONATO NETO, Norberto, 82024 TAUFKIRCHEN (DE); BAMMER, Benedikt, 82024 TAUFKIRCHEN (DE); MARIOTTO, Damien, 13700 MARIGNANE (FR)
(74) Mandataire: Cabinet Le Guen Maillet

(56) Documents cités:
- WO-A1-2017/114245
- DE-A1- 102004 004 480
- JP-A- S 621 690
- US-A1- 2017 190 435
- US-A1- 2019 193 835
- US-A1- 2020 361 622

## Description

### DOMAINE TECHNIQUE

La présente invention concerne un système de propulsion à hélice pour aéronef qui comporte une pluralité de moteurs électriques entraînant conjointement l'hélice en rotation.

### ETAT DE LA TECHNIQUE ANTERIEURE

Des moteurs électriques peuvent être utilisés pour entraîner en rotation une hélice de système de propulsion et ainsi déplacer un aéronef tant au sol qu'en vol.

Les aéronefs commerciaux étant des engins relativement lourds, une grande énergie de propulsion est nécessaire pour les déplacer. Les aéronefs disposent alors typiquement de plusieurs systèmes de propulsion, c'est-à-dire plusieurs moteurs à hélice. Malgré cela, chaque système de propulsion doit typiquement disposer de plusieurs moteurs électriques qui agissent conjointement pour entraîner l'hélice en rotation. JPS621690 A divulgue un système de propulsion à hélice utilisant une pluralité de moteurs électriques.

A cet effet, une boîte à engrenages est utilisée. Chaque moteur électrique comportant un arbre de sortie (arbre moteur), la boîte à engrenages assure l'accouplement mécanique entre les arbres de sortie de ces moteurs électriques et un arbre de sortie de la boîte à engrenages qui est solidaire de l'hélice. La boîte à engrenages comporte ainsi autant d'arbres d'entrée que de moteurs électriques mis en parallèle. Un inconvénient de cet agencement est que, les moteurs étant montés en parallèle, l'encombrement du système de propulsion est important dans le sens de la hauteur et de la largeur. Dit autrement, le diamètre du système de propulsion selon un plan perpendiculaire à l'axe de rotation de l'hélice est élevé. Cela nuit à l'aérodynamisme de l'aéronef et en accroît donc la consommation en carburant (e.g., hydrogène).

Il est alors souhaitable de fournir une solution qui permette d'améliorer l'aérodynamisme et la consommation de carburant de l'aéronef.

### EXPOSE DE L'INVENTION

Il est alors proposé un système de propulsion à hélice pour aéronef comportant : une hélice ; une pluralité de moteurs électriques comportant des arbres moteurs respectifs coaxiaux en montage gigogne ; et une boîte à engrenages ayant un arbre de sortie sur lequel est mécaniquement couplée l'hélice et un arbre d'entrée auquel sont couplés mécaniquement les arbres moteurs coaxiaux desdits moteurs électriques. De plus, l'axe de rotation des arbres moteurs coaxiaux est décentré par rapport à l'axe de rotation de l'arbre de sortie, et le système de propulsion à hélice comporte en outre un boîtier de contrôle d'orientation des pales de l'hélice placé dans la continuité de l'arbre de sortie, de l'autre côté de la boîte à engrenages par rapport à l'hélice.

Selon un mode de réalisation particulier, plus un dit arbre moteur coaxial a un diamètre petit, plus cet arbre moteur coaxial pénètre profondément dans la boîte à engrenages.

Selon un mode de réalisation particulier, les arbres moteurs coaxiaux sont mécaniquement couplés à une cloche solidaire de l'arbre d'entrée de telle sorte que les arbres moteurs coaxiaux et l'arbre d'entrée de la boîte à engrenages partagent un même axe de rotation.

Selon un mode de réalisation particulier, les arbres moteurs coaxiaux sont mécaniquement couplés à une paroi intérieure de la cloche par le biais d'engrenages respectifs associés à un agencement de roue libre.

Selon un mode de réalisation particulier, les arbres moteurs coaxiaux présentent des embouts de couplage avec des cannelures ou nervures permettant un assemblage solidaire desdits arbres moteurs coaxiaux avec lesdits engrenages par le biais de bagues cannelées respectives.

Selon un mode de réalisation particulier, les moteurs électriques sont disposés du plus près de la boîte à engrenages au plus éloigné de la boîte à engrenages selon un ordre décroissant des diamètres de leurs arbres moteurs coaxiaux.

Selon un mode de réalisation particulier, chaque arbre moteur coaxial comporte une portion de couplage avec un dit moteur qui est munie de cannelures ou de nervures afin de coupler mécaniquement l'arbre moteur coaxial en question avec un rotor dudit moteur électrique grâce à une bague cannelée.

Selon un mode de réalisation particulier, les portions desdits arbres moteurs coaxiaux permettant le couplage avec les rotors des moteurs électriques sont de même diamètre.

Il est aussi proposé un aéronef comportant au moins un système de propulsion à hélice tel qu'évoqué ci-dessus dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en perspective, un aéronef équipé d'au moins un système de propulsion à hélice ;
[Fig. 2] illustre schématiquement, en vue en coupe simplifiée, un agencement d'une première partie d'un tel système de propulsion à hélice ; et
[Fig. 3] illustre schématiquement, en vue en coupe simplifiée, un agencement d'une deuxième partie d'un tel système de propulsion à hélice.

### EXPOSE DETAILLE DE MODES DE REALISATION

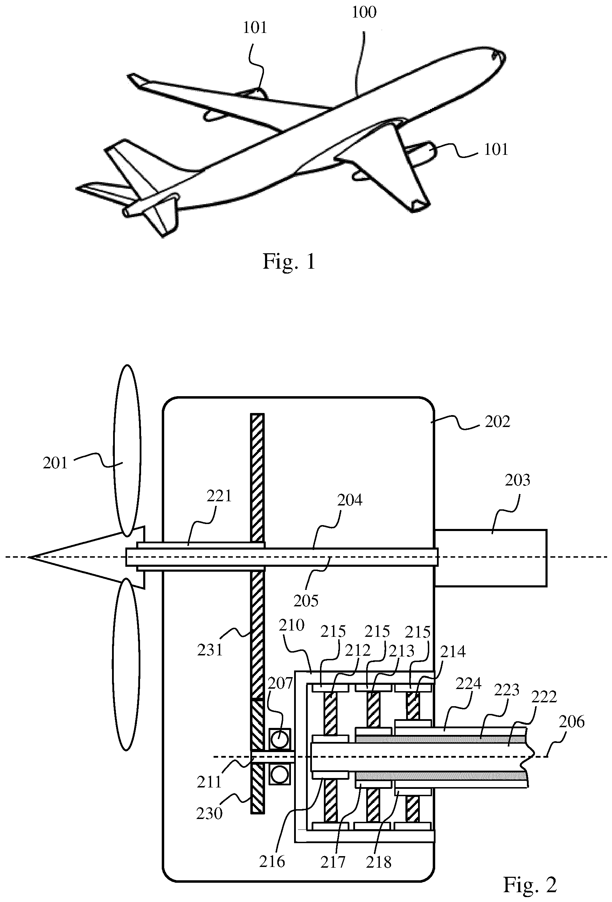

La Fig. 1 illustre schématiquement, en perspective, un aéronef 100 équipé d'au moins un système de propulsion à hélice 101. De manière illustrative, l'aéronef 100 de la Fig. 1 comporte deux systèmes de propulsion à hélice 101 montés respectivement sur chacune des ailes de l'aéronef 100. L'aéronef 100 peut comporter un nombre différent de systèmes de propulsion à hélice 101.

Le terme « longueur » utilisé ici réfère à une dimension horizontale lorsque l'aéronef 100 est au sol, et le terme « hauteur » utilisé ici réfère à une dimension verticale lorsque l'aéronef 100 est au sol.

La Fig. 2 illustre schématiquement, en vue en coupe simplifiée, un agencement d'une première partie d'un tel système de propulsion à hélice 101.

Le système de propulsion à hélice 101 comporte une hélice 201 ainsi qu'une boîte à engrenages (« gearbox » en anglais) 202. L'hélice peut être une hélice de turbopropulseur comme schématiquement représenté sur la Fig. 2. Toutefois, d'autres configurations d'hélice peuvent être envisagées sans sortir du cadre de l'invention. Ainsi, l'hélice peut par exemple correspondre à une hélice carénée (« ducted fan » en anglais). La boîte à engrenages 202 comporte un arbre de sortie 221 auquel est mécaniquement couplée l'hélice 201. Comme illustré sur la Fig. 2, l'hélice 201 est typiquement montée au bout de l'arbre de sortie 221 de sorte que son axe de rotation est l'axe de révolution 205 de l'arbre de sortie 221.

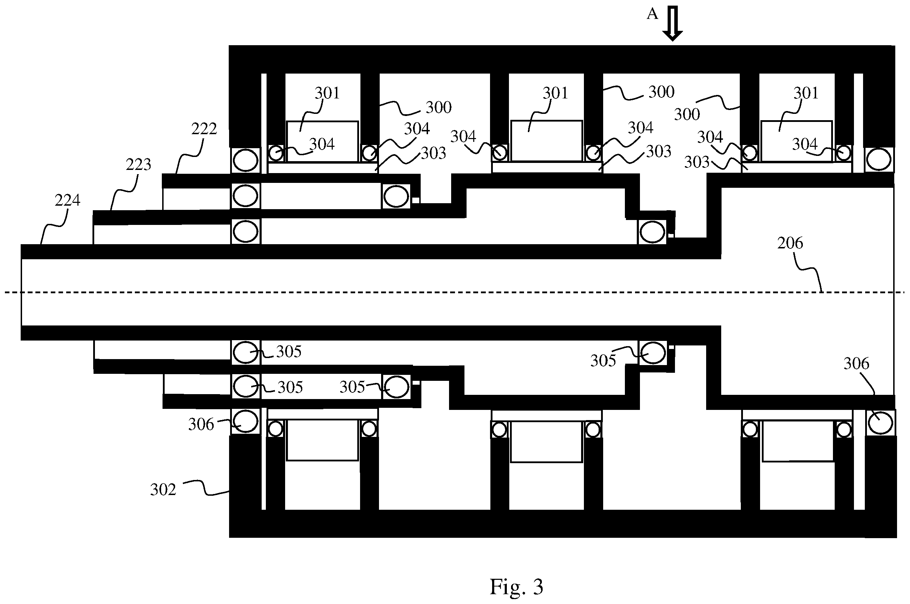

Le système de propulsion à hélice 101 comporte une pluralité de moteurs électriques 300 (voir Fig. 3) dédiés à la mise en rotation de l'hélice 201 via la boîte à engrenages 202. Par exemple, chaque moteur électrique 300 est alimenté par une ou plusieurs piles à combustible, telles que des piles à hydrogène.

Chaque moteur électrique 300 comporte un arbre moteur et tous les arbres moteurs desdits moteurs électriques 300 sont coaxiaux. Le système de propulsion à hélice 101 comporte, de manière illustrative, trois moteurs électriques 300 et trois arbres moteurs coaxiaux 222, 223, 224 sont ainsi schématiquement représentés sur la Fig. 2.

Les arbres moteurs coaxiaux 222, 223, 224 pénètrent dans la boîte à engrenages 202 du côté opposé à celui duquel émerge l'arbre de sortie 221. La boîte à engrenages 202 comporte un ensemble d'engrenages 230, 231 agencés de sorte à assurer une fonction de réduction de vitesse de rotation.

Les arbres moteurs coaxiaux 222, 223, 224 sont mécaniquement couplés à un même arbre d'entrée 211 de la boîte à engrenages 202. Typiquement, l'arbre d'entrée 211 est équipé de roulements à billes 207 afin d'assurer la libre rotation de l'arbre d'entrée 211 dans la boîte à engrenages 202.

Les arbres moteurs coaxiaux 222, 223, 224 ont différents diamètres et se logent les uns dans les autres selon un montage gigogne. Ainsi, l'arbre moteur 222 de plus petit diamètre est logé, libre en rotation, dans un corps tubulaire de l'arbre moteur 223 de diamètre immédiatement supérieur, et ainsi de suite.

Dans un mode de réalisation particulier comme illustré sur la Fig. 2, plus un dit arbre moteur coaxial a un diamètre petit, plus cet arbre moteur coaxial pénètre profondément dans la boîte à engrenages 202. Ainsi, l'arbre moteur coaxial 222 pénètre plus profondément dans la boîte à engrenages 202 que l'arbre moteur coaxial 223, qui lui-même pénètre plus profondément dans la boîte à engrenages 202 que l'arbre moteur coaxial 224. Cela permet d'aisément présenter un embout de couplage pour chacun des arbres moteurs coaxiaux 222, 223, 224, afin de réaliser un couplage conjoint des arbres moteurs coaxiaux 222, 223, 224 avec l'arbre d'entrée 211 de la boîte à engrenages 202.

Dans un mode de réalisation particulier, les arbres moteurs coaxiaux 222, 223, 224 sont mécaniquement couplés à une cloche 210 solidaire de l'arbre d'entrée 211 de telle sorte que les arbres moteurs coaxiaux 222, 223, 224 et l'arbre d'entrée 211 de la boîte à engrenages 202 partagent un même axe de rotation 206. Préférentiellement, les arbres moteurs coaxiaux 222, 223, 224 sont mécaniquement couplés à la paroi intérieure de la cloche 210 par le biais d'engrenages respectifs 212, 213, 214 associés à un agencement de roue libre (en prise dans un seul sens de rotation, « freewheel » en anglais) 215. Les embouts de couplage des arbres moteurs coaxiaux 222, 223, 224 peuvent présenter des cannelures ou nervures permettant un assemblage solidaire desdits arbres moteurs coaxiaux 222, 223, 224 avec les engrenages respectifs 212, 213, 214 par le biais de bagues cannelées respectives 216, 217, 218.

L'axe de rotation 206 des arbres moteurs coaxiaux 222, 223, 224 peut être confondu avec l'axe de rotation 205 de l'arbre de sortie 221 de la boîte à engrenages 202. Toutefois, l'axe de rotation 206 des arbres moteurs coaxiaux 222, 223, 224 est préférentiellement parallèle à l'axe de rotation 205 de l'arbre de sortie 221 et excentré par rapport à l'axe de rotation 205 de l'arbre de sortie 221. Cet agencement est particulièrement avantageux lorsque le système de propulsion à hélice 101 comporte un boîtier 203 incluant un mécanisme de contrôle d'orientation (« pitch control » en anglais) des pales de l'hélice 201. Ainsi, le boîtier 203 est préférentiellement placé dans la continuité de l'arbre de sortie 221, de l'autre côté de la boîte à engrenages 202 par rapport à l'hélice 201, grâce au décentrage entre les axes 205 et 206. Cela permet d'assurer aisément une liaison mécanique 204 entre le boîtier 203 et l'hélice 201 au coeur d'un corps tubulaire de l'arbre de sortie 221. A défaut, le boîtier 203 est placé de sorte à minimiser au possible le décalage entre le boîtier 203 et l'axe 205 de rotation de l'hélice 201.

La Fig. 3 illustre schématiquement, en vue en coupe simplifiée, un agencement d'une deuxième partie du système de propulsion à hélice 101, où un agencement des moteurs électriques 300 et des arbres moteurs coaxiaux 222, 223, 224 en montage gigogne est représenté.

Les moteurs électriques 300 sont disposés en ligne. Les moteurs électriques 300 sont disposés du plus près de la boîte à engrenages 202 au plus éloigné de la boîte à engrenages 202 selon un ordre décroissant de leurs diamètres d'arbres moteurs coaxiaux respectifs 222, 223, 224.

Chaque arbre moteur coaxial 222, 223, 224 comporte une portion de couplage avec un dit moteur 300. Dans un mode de réalisation particulier, cette portion de couplage est munie de cannelures ou de nervures afin de coupler mécaniquement l'arbre moteur en question avec un rotor 301 dudit moteur électrique 300 grâce à une bague cannelée 303. Des roulements à billes 304 permettent alors d'assurer la rotation des arbres moteurs coaxiaux et de leurs rotors respectifs 301 par rapport à un châssis ou carter 302 dans lequel lesdits moteurs électriques 300 sont logés et qui est fixe par rapport à la boîte à engrenages 202.

Préférentiellement, les portions desdits arbres moteurs coaxiaux 222, 223, 224 permettant le couplage avec les rotors 301 des moteurs électriques 300 sont de même diamètre. Ainsi, le couplage avec le rotor 301 ne dépend pas de la position de l'arbre moteur coaxial considéré 222, 223, 224 dans le montage gigogne. Des moteurs électriques 300 strictement identiques peuvent alors être utilisés, ce qui simplifie la conception et la maintenance.

De manière à assurer la libre rotation des axes moteurs coaxiaux 222, 223, 224 les uns par rapport aux autres, des roulements à billes 305 sont présents entre deux axes moteurs coaxiaux successifs. Ces roulements à billes étant peu sollicités en fonctionnement nominal, une variante consiste à les remplacer par des paliers lisses (« plain bush » en anglais) lubrifiés.

D'autres roulements à billes 306 permettent d'assurer la libre rotation de l'ensemble formé par les axes moteurs coaxiaux 222, 223, 224 par rapport au châssis ou carter 302.

Un trajet de chargement (« loading path » en anglais) peut être assuré avec un premier point d'ancrage sur la boîte à engrenages 202 et un second point d'ancrage sur une partie du châssis ou carter 302 éloignée de la boîte à engrenages 202, par exemple une partie du châssis ou carter 302 située entre les deux moteurs électriques 300 les plus éloignés de la boîte à engrenages 202, comme illustré par la flèche A sur la Fig. 3. Cela limite le porte-à-faux.

Le système de propulsion à hélice 101 est préférentiellement autonome afin d'en simplifier l'installation et la maintenance, comme décrit dans le document de brevet FR3097202A1 ou le document de brevet US 2021/0078719 A1.

## Revendications

1. Un système de propulsion à hélice (101) pour aéronef (100) comportant :
- une hélice (201) ;
- une pluralité de moteurs électriques (300) comportant des arbres moteurs respectifs coaxiaux (222, 223, 224) en montage gigogne ; et
- une boîte à engrenages (202) ayant un arbre de sortie (221) sur lequel est mécaniquement couplée l'hélice (201) et un arbre d'entrée auquel sont couplés mécaniquement les arbres moteurs coaxiaux (222, 223, 224) desdits moteurs électriques (300),
**caractérisé en ce que** l'axe de rotation (206) des arbres moteurs coaxiaux (222, 223, 224) est décentré par rapport à l'axe de rotation (205) de l'arbre de sortie, et comporte en outre un boîtier (203) incluant un mécanisme de contrôle d'orientation des pales de l'hélice (201) placé dans la continuité de l'arbre de sortie (221), de l'autre côté de la boîte à engrenages (202) par rapport à l'hélice (201).

2. Le système de propulsion à hélice selon la revendication 1, dans lequel plus un dit arbre moteur coaxial (222, 223, 224) a un diamètre petit, plus cet arbre moteur coaxial (222, 223, 224) pénètre profondément dans la boîte à engrenages (202).

3. Le système de propulsion à hélice selon la revendication 2, dans lequel les arbres moteurs coaxiaux (222, 223, 224) sont mécaniquement couplés à une cloche (210) solidaire de l'arbre d'entrée (211) de telle sorte que les arbres moteurs coaxiaux (222, 223, 224) et l'arbre d'entrée (211) de la boîte à engrenages (202) partagent un même axe de rotation (206).

4. Le système de propulsion à hélice (101) selon la revendication 3, dans lequel les arbres moteurs coaxiaux (222, 223, 224) sont mécaniquement couplés à une paroi intérieure de la cloche (210) par le biais d'engrenages respectifs (212, 213, 214) associés à un agencement de roue libre (215).

5. Le système de propulsion à hélice (101) selon la revendication 4, dans lequel les arbres moteurs coaxiaux (222, 223, 224) présentent des embouts de couplage avec des cannelures ou nervures permettant un assemblage solidaire desdits arbres moteurs coaxiaux (222, 223, 224) avec lesdits engrenages (212, 213, 214) par le biais de bagues cannelées respectives (216, 217, 218).

6. Le système de propulsion à hélice (101) selon l'une quelconque des revendications 1 à 5, dans lequel les moteurs électriques (300) sont disposés du plus près de la boîte à engrenages (202) au plus éloigné de la boîte à engrenages (202) selon un ordre décroissant des diamètres de leurs arbres moteurs coaxiaux (222, 223, 224).

7. Le système de propulsion à hélice (101) selon l'une quelconque des revendications 1 à 6, dans lequel chaque arbre moteur coaxial (222, 223, 224) comporte une portion de couplage avec un dit moteur (300) qui est munie de cannelures ou de nervures afin de coupler mécaniquement l'arbre moteur coaxial (222, 223, 224) en question avec un rotor (301) dudit moteur électrique (300) grâce à une bague cannelée (303).

8. Le système de propulsion à hélice (101) selon la revendication 7, dans lequel les portions desdits arbres moteurs coaxiaux (222, 223, 224) permettant le couplage avec les rotors (301) des moteurs électriques (300) sont de même diamètre.

9. Un aéronef (100) comportant au moins un système de propulsion à hélice (101) selon l'une quelconque des revendications 1 à 8.

## Patentansprüche

1. Propellerantriebssystem (101) für ein Luftfahrzeug (100), das Folgendes umfasst:
- einen Propeller (201);
- eine Vielzahl von Elektromotoren (300) mit jeweiligen koaxialen, ineinander verschachtelt montierten Motorwellen (222, 223, 224); und
- ein Getriebegehäuse (202) mit einer Ausgangswelle (221), mit der der Propeller (201) mechanisch gekoppelt ist, und einer Eingangswelle, mit der die koaxialen Motorwellen (222, 223, 224) der Elektromotoren (300) mechanisch gekoppelt sind,
**dadurch gekennzeichnet, dass** die Drehachse (206) der koaxiale Motorwellen (222, 223, 224) relativ zur Drehachse (205) der Ausgangswelle dezentriert ist, ferner umfassend ein Gehäuse (203), das einen Mechanismus zum Steuern der Ausrichtung der Blätter des Propellers (201) beinhaltet, der in Fortführung der Ausgangswelle (221) auf der anderen Seite des Getriebegehäuses (202) gegenüber dem Propeller (201) angeordnet ist.

2. Propellerantriebssystem nach Anspruch 1, wobei eine koaxiale Motorwelle (222, 223, 224) umso tiefer in das Getriebegehäuse (202) eindringt, je kleiner der Durchmesser dieser koaxialen Motorwelle (222, 223, 224) ist.

3. Propellerantriebssystem nach Anspruch 2, wobei die koaxialen Motorwellen (222, 223, 224) mechanisch mit einer Glocke (210) gekoppelt sind, die fest mit der Eingangswelle (211) verbunden ist, so dass die koaxialen Motorwellen (222, 223, 224) und die Eingangswelle (211) des Getriebegehäuses (202) dieselbe Drehachse (206) teilen.

4. Propellerantriebssystem (101) nach Anspruch 3, wobei die koaxialen Motorwellen (222, 223, 224) über jeweilige Zahnräder (212, 213, 214), die mit einer Freilaufanordnung (215) verbunden sind, mechanisch mit einer Innenwand der Glocke (210) gekoppelt sind.

5. Propellerantriebssystem (101) nach Anspruch 4, wobei die koaxialen Motorwellen (222, 223, 224) Endstücke zur Kopplung mit Rillen oder Rippen aufweisen, die eine feste Verbindung der koaxialen Motorwellen (222, 223, 224) mit den Zahnrädern (212, 213, 214) über jeweilige gerillte Ringe (216, 217, 218) ermöglichen.

6. Propellerantriebssystem (101) nach einem der Ansprüche 1 bis 5, wobei die Elektromotoren (300) dem Durchmesser ihrer koaxialen Motorwellen (222, 223, 224) nach in absteigender Reihenfolge von dem Getriebegehäuse (202) am nächsten liegend zu vom Getriebegehäuse (202) am weitesten entfernt angeordnet sind.

7. Propellerantriebssystem (101) nach einem der Ansprüche 1 bis 6, wobei jede koaxiale Motorwelle (222, 223, 224) einen Abschnitt zur Kopplung mit einem Motor (300) aufweist, der mit Rillen oder Rippen versehen ist, um die jeweilige koaxiale Motorwelle (222, 223, 224) anhand eines gerillten Rings (303) mechanisch mit einem Rotor (301) des Elektromotors (300) zu koppeln.

8. Propellerantriebssystem (101) nach Anspruch 7, wobei die Abschnitte der koaxialen Motorwellen (222, 223, 224), die eine Kopplung mit den Rotoren (301) der Elektromotoren (300) ermöglichen, denselben Durchmesser aufweisen.

9. Luftfahrzeug (100), umfassend mindestens ein Propellerantriebssystem (101) nach einem der Ansprüche 1 bis 8.

## Claims

1. Propeller-type propulsion system (101) for an aircraft (100), comprising:
- a propeller (201);
- a plurality of electric motors (300) comprising respective nested coaxial driveshafts (222, 223, 224); and
- a gearbox (202) having an output shaft (221) onto which the propeller (201) is mechanically coupled, and an input shaft to which the coaxial driveshafts (222, 223, 224) of said electric motors (300) are mechanically coupled,
**characterized in that** the axis of rotation (206) of the coaxial driveshafts (222, 223, 224) is off-centre with respect to the axis of rotation (205) of the output shaft and further comprises a housing (203) that includes a mechanism for controlling the orientation of the blades of the propeller (201) and is placed in continuity with the output shaft (221), on the opposite side of the gearbox (202) from the propeller (201).

2. Propeller-type propulsion system according to Claim 1, wherein the smaller the diameter of such a coaxial driveshaft (222, 223, 224), the further into the gearbox (202) that coaxial driveshaft (222, 223, 224) passes.

3. Propeller-type propulsion system according to Claim 2, wherein the coaxial driveshafts (222, 223, 224) are mechanically coupled to a bell housing (210) secured to the input shaft (211) in such a manner that the coaxial driveshafts (222, 223, 224) and the input shaft (211) of the gearbox (202) share the same axis of rotation (206).

4. Propeller-type propulsion system (101) according to Claim 3, wherein the coaxial driveshafts (222, 223, 224) are mechanically coupled to an internal wall of the bell housing (210) by means of respective gearwheels (212, 213, 214) associated with a freewheel arrangement (215).

5. Propeller-type propulsion system (101) according to Claim 4, wherein the coaxial driveshafts (222, 223, 224) have coupling ends with splines or ribs that allow said coaxial driveshafts (222, 223, 224) to be securely assembled with said gearwheels (212, 213, 214) by means of respective splined rings (216, 217, 218).

6. Propeller-type propulsion system (101) according to any one of Claims 1 to 5, wherein the electric motors (300) are arranged from the closest to the gearbox (202) to the furthest from the gearbox (202) in order of decreasing diameter of their coaxial driveshafts (222, 223, 224).

7. Propeller-type propulsion system (101) according to any one of Claims 1 to 6, wherein each coaxial driveshaft (222, 223, 224) comprises a portion for coupling to one such motor (300), which is provided with splines or ribs in order to mechanically couple the coaxial driveshaft (222, 223, 224) in question to a rotor (301) of said electric motor (300) by virtue of a splined ring (303).

8. Propeller-type propulsion system (101) according to Claim 7, wherein the portions of said coaxial driveshafts (222, 223, 224) that allow coupling to the rotors (301) of the electric motors (300) have the same diameter.

9. Aircraft (100) comprising at least one propeller-type propulsion system (101) according to any one of Claims 1 to 8.
